# EUROPÄISCHE PATENTSCHRIFT

(11) **EP 3 953 128 B1**
(45) Veröffentlichungstag und Bekanntmachung des Hinweises auf die Patenterteilung: **13.12.2023**
(21) Anmeldenummer: 20719922.5
(22) Anmeldetag: 09.04.2020
(51) Int. Cl.: B29B 9/16, B29B 13/04, B04C 5/04, B04C 5/103, B04C 5/13, B04C 5/20, B29C 35/16, B29B 9/06

(54) **VORRICHTUNG ZUM ABKÜHLEN VON PARTIKELFÖRMIGEN MATERIALIEN**
DEVICE FOR COOLING PARTICULATE MATERIALS
DISPOSITIF DE REFROIDISSEMENT DE MATÉRIAUX PARTICULAIRES

(30) Priorität: 12.04.2019 AT 503342019
(43) Veröffentlichungstag der Anmeldung: 16.02.2022
(73) Patentinhaber: EREMA Engineering Recycling Maschinen und Anlagen Gesellschaft m.b.H., 4052 Ansfelden (AT)
(72) Erfinder: AIGNER, Michael, 4060 Leonding (AT); WAGNER, Christian, 4212 Neumarkt im Mühlkreis (AT); HUBER, Roland, 4303 St. Pantaleon (AT); FEICHTINGER, Klaus, 4040 Linz (AT)
(74) Vertreter: Wildhack & Jellinek Patentanwälte
(86) Internationale Anmeldenummer: PCT/AT2020/060143
(87) Internationale Veröffentlichungsnummer: WO 2020/206477

(56) Entgegenhaltungen:
- CH-A5- 616 362
- DE-A1- 3 618 272
- DE-U1- 29 924 229
- FR-A1- 2 670 137
- JP-A- 2003 011 121
- US-A- 2 067 710
- US-A1- 2002 008 072

## Beschreibung

Die vorliegende Erfindung betrifft eine Vorrichtung zum Abkühlen von partikelförmigen Materialien, insbesondere von Granulaten aus polymeren Materialien, gemäß Anspruch 1. Granulate werden beispielsweise erzeugt, indem Polymermaterialien in einem Extruder plastifiziert werden. Die über eine Lochplatte austretende strangförmige Polymerschmelze wird dann über rotierende Messer in kleinteilige Partikel geschnitten. Diese Granulate, bei denen zumindest noch der Kernbereich in Schmelze vorliegt, werden dann im Gas- oder Wasserstrom gekühlt und verfestigt und gleichzeitig mit dem Fluidstrom abtransportiert. Eine anschließende weitere Abkühlung der Partikel erfolgt dann beispielsweise in nachgelagerten weiteren Abkühleinheiten. Aus dem Stand der Technik sind beispielweise zylindrische Kühlbehälter bekannt, in denen die Granulate bewegt werden und dabei abkühlen.

Aus dem Stand der Technik sind weiters zylindrische oder konische Kühlbehälter bekannt, in denen die Granulate tangential in den Zwischenraum eingebracht werden, beispielsweise aus der US 2067710, der US 2002008072 oder der DE 3618272. In der FR 2670137 ist ebenfalls eine derartige Vorrichtung beschrieben, wobei der Einlasskanal den Zwischenraum jeweils nicht verschließt.

Aufgabe der vorliegenden Erfindung ist es, eine derartige Abkühleinheit zu schaffen, in der die Verweilzeit der Granulate möglichst hoch und das Verweilzeitspektrum der einzelnen Partikel eng gehalten werden kann und die Partikel vereinzelt gehalten werden. Die vorliegende Erfindung löst diese Aufgabe durch eine Vorrichtung gemäß den Merkmalen des Anspruchs 1. Erfindungsgemäß ist dabei vorgesehen, dass die Vorrichtung umfasst: einen Außenbehälter mit einer, insbesondere kegelstumpfförmigen, äußeren Mantelfläche und einen zumindest abschnittsweise im Inneren des Außenbehälters angeordneten Innenbehälter mit einer, insbesondere kegelstumpfförmigen, inneren Mantelfläche, wobei zwischen der äußeren Mantelfläche und der inneren Mantelfläche ein Zwischenraum ausgebildet ist. Im einlassseitigen Anfangsbereich der Vorrichtung ist eine Einlasseinrichtung zum Einbringen eines Gasstroms sowie der Partikel bzw. Granulate in den Zwischenraum vorgesehen, wobei im der Einlasseinrichtung gegenüberliegenden auslassseitigen Endbereich der Vorrichtung eine Austrittsöffnung für die Partikel vorgesehen ist. Die Einlasseinrichtung ist so angeordnet und/oder ausgebildet, dass der Gasstrom sowie die Partikel im wesentlichen tangential in den Zwischenraum einbringbar sind.

Die spezielle tangentiale Einbringung des Gasstroms bzw. der Partikel und deren dadurch bewirkte Bewegung durch den Zwischenraum zwischen der äußeren Mantelfläche und der inneren Mantelfläche verlängert den Weg, den die Partikel durch die Vorrichtung nehmen müssen und unterstützt damit die Erhöhung der Verweilzeit. Gleichzeitig wird das Verweilzeitspektrum der Partikel eng gehalten. Durch die derart geführte Luftströmung bleibt das Gas auch ausreichend laminar und es gibt keine Verwirbelungen. Die Partikel werden so in einem engen Geschwindigkeitsbereich gehalten und unkontrollierte Kollisionen, die zu einer Abbremsung der Teilchen führen würden, werden verringert. Weiters wird auch der Kontakt der Partikel mit den Wandungen minimiert und eine Abbremsung und/oder Ablagerung der Partikel verhindert. Auch ein Ankleben der Granulatteilchen an der Wand wird vermieden. Besonders vorteilhaft ist es, dass auch ein Verkleben der Granulatteilchen untereinander weitestgehend verhindert wird.

Die Partikel werden mit einem durch die Anordnung geführten Medium, insbesondere mit einem Gas, transportiert. Dieses Gas kann jedes beliebige Gas oder Gasgemisch sein, insbesondere wird Luft eingesetzt. Der Gasstrom transportiert die Teilchen, wobei diese Materialteilchen bzw. Granulate bzw. Würstchen od. dgl. dabei mit Hilfe des Gasstroms abgekühlt, und gegebenenfalls noch weiter verfestigt, und gegebenenfalls noch weiter chemisch ausreagiert werden, z.B. durch thermische Beeinflussung, Abkühlung bzw. durch eine durch das Gas initiierte bzw. induzierte Reaktion. Es können auch verdampfende Medien zu Hilfe genommen werden, wie z.B. Wasser.

Die erfindungsgemäße Anordnung ist für alle Materialien einsetzbar, bei denen eine Ausformung von Strängen in ein Granulat durchführbar ist. Dazu gehören Polymere, Teige, keramische Massen, Gummi, thermoplastische Polyurethane, Silikone, usw. Die granulierten Materialien können mit Fasern verstärkt und/oder auch teilvernetzt sein. Sie können auf Polyester, Polyolefinen oder auch Polyamiden basieren. Es ist vor allem auch möglich, alle zumindest teilweise plastifizierbaren, vorzugsweise extrudierbaren, Materialien, die erweichbar bzw. aufschmelzbar und in Teilchen überführbar bzw. verfestigbar sind, mit der erfindungsgemäßen Anordnung zu transportieren und während des Transports u.a. zu kühlen.

Für die Erzielung der tangentialen Strömung im Zwischenraum ist erfindungsgemäß vorgesehen, dass die Einlasseinrichtung einen Einlasskanal und insbesondere einen stromaufwärts dazu angeordneten Einlassstutzen aufweist. Über diesen Einlasskanal sind der Gasstrom sowie die zu kühlenden Partikel zuführbar. Ansonsten verschließt der Einlasskanal den Zwischenraum einlassseitig. Der Einlasskanal ist platzsparend gekrümmt ausgebildet, verläuft parallel zum Umfang der äußeren Mantelfläche und der inneren Mantelfläche, und mündet somit in den Zwischenraum im wesentlichen tangential ein.

Vorteilhafte Weiterentwicklungen der Vorrichtung ergeben sich durch die Merkmale der abhängigen Ansprüche.

So ist es beispielsweise aus konstruktiven Gründen vorteilhaft, wenn vorgesehen ist, dass die äußere Mantelfläche und/oder die innere Mantelfläche im wesentlichen rotationssymmetrisch um eine zentrale Längsachse angeordnet sind.

Die Vorrichtung wird üblicherweise vertikal aufgestellt, sie kann aber auch liegend bzw. horizontal oder je nach Zweckmäßigkeit in einer Schräglage aufgestellt sein.

Zur Erzielung einer vorteilhaften Gasströmung ist es vorteilhaft, wenn die äußere Mantelfläche und/oder die innere Mantelfläche gegenüber einer zentralen Längsachse um einen Kegelwinkel β geneigt ist, wobei der Kegelwinkel im Bereich von 1° <= β <= 15°, insbesondere im Bereich von 3° <= β <= 10°, vorzugsweise im Bereich von 3° <= β <= 6°, liegt. Dies unterstützt dabei die Luftströmung ausreichend hoch zu halten und bewirkt, dass die Partikel besonders lange vereinzelt im Zwischenraum verbleiben und auch um spezifisch schwerere Teilchen entsprechend lange im Kühltrichter verweilen zu lassen.

Eine störungsfreie Strömung lässt sich erzielen, wenn die äußere Mantelfläche und die innere Mantelfläche voneinander allseitig berührungsfrei beabstandet sind.

Eine vorteilhafte Verweilzeit ergibt sich auch, wenn vorgesehen ist, dass die Breite des Zwischenraums zwischen der äußeren Mantelfläche und der inneren Mantelfläche im Bereich von 20 mm <= a <= 200 mm, insbesondere im Bereich von 50 mm <= a <= 100 mm, vorzugsweise im Bereich von 60 mm <= a <= 80 mm liegt. Auch dies bewirkt, dass die Partikel lange und vereinzelt im Zwischenraum verbleiben. Zu große Abstände würden eine zu wenig in Richtung des Umfangs gerichtete Luftströmung und dadurch eine Reduzierung der Verweilzeit der Partikel ergeben. Ein zu enger Spalt würde die Luftgeschwindigkeit und die Dichte der Partikel erhöhen, wobei sich dies einerseits in kürzerer Verweilzeit aber auch in höherer Kollisions- und Trefferwahrscheinlichkeit der Partikel untereinander auswirken würde.

Es ist in diesem Zusammenhang vorteilhaft, wenn bei der Auswahl der Breite a des Zwischenraums 6 auch die Größe bzw. der Durchmesser der Granulate bzw. Partikel berücksichtigt wird. Eine vorteilhafte Breite a liegt dabei im Bereich zwischen dem 4- und 40-fachen des mittleren Durchmessers der Partikel.

Gemäß einer vorteilhaften Ausführungsform ist vorgesehen, dass die äußere Mantelfläche und die innere Mantelfläche zueinander parallel ausgerichtet sind.

Alternativ kann vorgesehen sein, dass sich die Breite des Zwischenraums zwischen der äußeren Mantelfläche und der inneren Mantelfläche in Richtung des auslassseitigen Endbereichs, insbesondere gleichförmig, verringert. Eine derartige Verjüngung des Zwischenraums ist speziell bei kleineren Partikeln vorteilhaft, da die beschleunigende Wirkung des Gasstroms durch den engeren Zwischenraum genutzt wird, um die vereinzelnde Wirkung aufrecht zu erhalten.

Alternativ kann auch vorgesehen sein, dass sich die Breite des Zwischenraums zwischen der äußeren Mantelfläche und der inneren Mantelfläche in Richtung des auslassseitigen Endbereichs, insbesondere gleichförmig, vergrößert. Umgekehrt besitzt auch ein sich über die Höhe vergrößernder Zwischenraum Vorteile bei größeren Partikeln, da hierbei die abbremsende Wirkung durch Stöße mit den Wänden reduziert wird und somit ebenfalls die Vereinzelung leicht aufrecht erhalten werden kann.

Der Innenbehälter bzw. die innere Mantelfläche ist kürzer bzw. weniger hoch als der Außenbehälter bzw. die äußere Mantelfläche. In diesem Zusammenhang hat es sich vorteilhaft bewährt, wenn die Länge bzw. Höhe des Außenbehälters oder der äußeren Mantelfläche größer ist als die Länge bzw. Höhe des Innenbehälters oder der inneren Mantelfläche. Besonders vorteilhaft ist es, wenn das Verhältnis hi : ha im Bereich von 0,1 bis 1, insbesondere im Bereich von 0,3 bis 0,85, vorzugsweise im Bereich von 0,50 bis 0,75 liegt.

Um die Einlasseinrichtung vorteilhaft auf die Vorrichtung aufsetzen bzw. anschließen zu können, ist es günstig, wenn die äußere Mantelfläche und die innere Mantelfläche an ihren einlassseitigen Anfangsbereichen bündig abschließen.

Weiters ist es vorteilhaft, wenn der Durchmesser der äußeren Mantelfläche am einlassseitigen Anfangsbereich größer ist als deren Durchmesser am auslassseitigen Endbereich bzw. dass sich der Außenbehälter in Richtung des auslassseitigen Endbereichs verjüngt.

Analog ist dies auch für den Innenbehälter vorteilhaft, und zwar wenn vorgesehen ist, dass der Durchmesser der inneren Mantelfläche am einlassseitigen Anfangsbereich größer ist als deren auslassseitiger Durchmesser am auslassseitigen Endbereich bzw. dass sich der Innenbehälter in Richtung des auslassseitigen Endbereichs verjüngt.

Eine gleichmäßigere Strömungsgeschwindigkeit, eine vorteilhafte Verweilzeit und ein vorteilhaftes Verweilzeitspektrum lassen sich also dann erzielen, wenn sich die äußere Mantelfläche und die innere Mantelfläche in Richtung des auslassseitigen Endbereichs verjüngen.

Für eine effektive Abtrennung der Partikel vom Gasstrom ist es vorteilhaft, wenn sich die äußere Mantelfläche in Richtung des auslassseitigen Endbereichs weiter erstreckt bzw. länger ist als die innere Mantelfläche. Es liegt dadurch in diesem auslassnahen Abschnitt der Vorrichtung ein Abscheidebereich vor, in dem der Innenbehälter bereits zu Ende ist und auch kein definierter Zwischenraum mehr existiert. Dieser Abscheidebereich wird nur noch durch den Außenbehälter bzw. die äußere Mantelfläche begrenzt. Auch dort bewegen sich die Partikel aber weiterhin entlang der äußeren Mantelfläche spiralig bis zum Auslass. Der Gasstrom wird hingegen am Ende des Zwischenraums bzw. im Abscheidebereich in die entgegengesetzte Richtung, also in Richtung zum Einlass hin, über den Innenbehälter abgeführt und es erfolgt so eine Trennung der Partikel vom Gasstrom.

Für die Abtrennung der Partikel vom Gasstrom ist es dabei vorteilhaft, wenn die innere Mantelfläche an ihrem dem einlassseitigen Anfangsbereich nahen Ende offen oder gasdurchlässig ausgebildet ist und dass das Gas auf diese Weise durch diese dem Anfangsbereich nahe Öffnung der inneren Mantelfläche abgezogen werden kann. Diese Öffnung kann mit einer gasdurchlässigen Deckfläche versehen sein, beispielweise durch ein Gitter.

Die Abtrennung der Partikel wird durch die Weiterführung der äußeren Mantelfläche im Vergleich zur inneren Mantelfläche unterstützt. In diesem Zusammenhang ist es für eine effektive Abtrennung der Partikel vom Gas besonders vorteilhaft, wenn die durch den Durchmesser am auslassseitigen Endbereich definierte Öffnung der äußeren Mantelfläche bzw. die durch den Durchmesser der Austrittsöffnung definierte Fläche gegenüber der durch den Durchmesser am auslassseitigen Endbereich definierten Öffnung der inneren Mantelfläche derart reduziert ist, dass sich für das Gas ein ausreichender Strömungswiderstand bildet.

Es kann also die äußere Mantelfläche so weit verjüngt werden, bis die durch die auslassseitige Öffnung definierte Austrittsöffnung so klein ist und so viel Widerstand bietet, dass kaum noch Gas bzw. Luft aus dieser Öffnung austreten kann und das Gas den Weg über den Innenbehälter nehmen muss, um zu entweichen. Dies bedingt allerdings eine größere Bauhöhe und ist aus konstruktionstechnischen Gründen teilweise unpraktikabel.

Eine diesbezüglich, vor allem bei vertikaler Aufstellung, vorteilhafte Ausführungsform sieht vor, dass am auslassseitigen Endbereich der äußeren Mantelfläche, also an der auslassseitigen Öffnung, ein zusätzlicher, sich verjüngender, insbesondere kegelstumpfförmiger, Auslassstutzen angeordnet ist, in dem dann die eigentliche Austrittsöffnung vorgesehen ist, über den die Partikel aus der Vorrichtung austreten. Dieser Auslassstutzen hat steilere Winkel der Wandungen und verjüngt sich über die Höhe dadurch schneller. Dies bewirkt eine gute Gasabtrennung bei kleiner Bauhöhe. Die auslassseitige Öffnung der äußeren Mantelfläche wird dadurch verkleinert, denn die Austrittsöffnung besitzt eine wesentlich kleinere Fläche. Besonders vorteilhaft für eine gute Abtrennung der Partikel vom Gasstrom ist es in diesem Zusammenhang, wenn die Fläche dieser Austrittsöffnung <= 20 %, vorzugsweise <= 10 %, der Fläche, der durch den Durchmesser am auslassseitigen Endbereich definierten Öffnung der äußeren Mantelfläche, ist.

Für die Erzielung der tangentialen Strömung im Zwischenraum ist es vorteilhaft, wenn die Einlasseinrichtung einen Einlasskanal und insbesondere einen stromaufwärts dazu angeordneten Einlassstutzen, über den der Gasstrom sowie die zu kühlenden Partikel zuführbar sind, aufweist. Der Einlasskanal ist platzsparend gekrümmt ausgebildet und besitzt die gleiche Breite wie der Zwischenraum. Der Einlasskanal verläuft parallel zum Umfang der äußeren Mantelfläche und der inneren Mantelfläche, und mündet somit in den Zwischenraum im wesentlichen tangential ein.

Der derart gelenkte Gas- bzw. Partikelstrom bewegt sich damit einerseits tangential zum inneren bzw. äußeren Umfang des Zwischenraums, wird aber vorteilhafterweise auch unter einem geringen Eintrittswinkel eingebracht. Dabei ist es vorteilhaft, wenn der Einlasskanal in einem Winkel α gegenüber einer normal zur Längsachse ausgerichteten Ebene in den Zwischenraum einmündet, wobei dieser Eintrittswinkel α im Bereich von 0 < α <= 10° liegt. Es ist für die Strömungsverhältnisse insbesondere vorteilhaft, wenn der Einlasskanal über seine gesamte Längserstreckung unter diesem Winkel konstant geneigt ist. Durch Ausbildung einer derartigen Richtungsorientierung gelingt es auch im Falle eines Bedarfs an hohen Mengen an Medien, eine gerichtete Partikelbewegung zu erzeugen.

Unter diesem Eintrittswinkel α versteht man somit die wesentliche Strömungsrichtung des Gases sowie der Teilchen bzw. Partikel. Dieser Eintrittswinkel wird dann auch zumindest im Anfangsabschnitt über den weiteren Verlauf der Teilchen im Zwischenraum beibehalten.

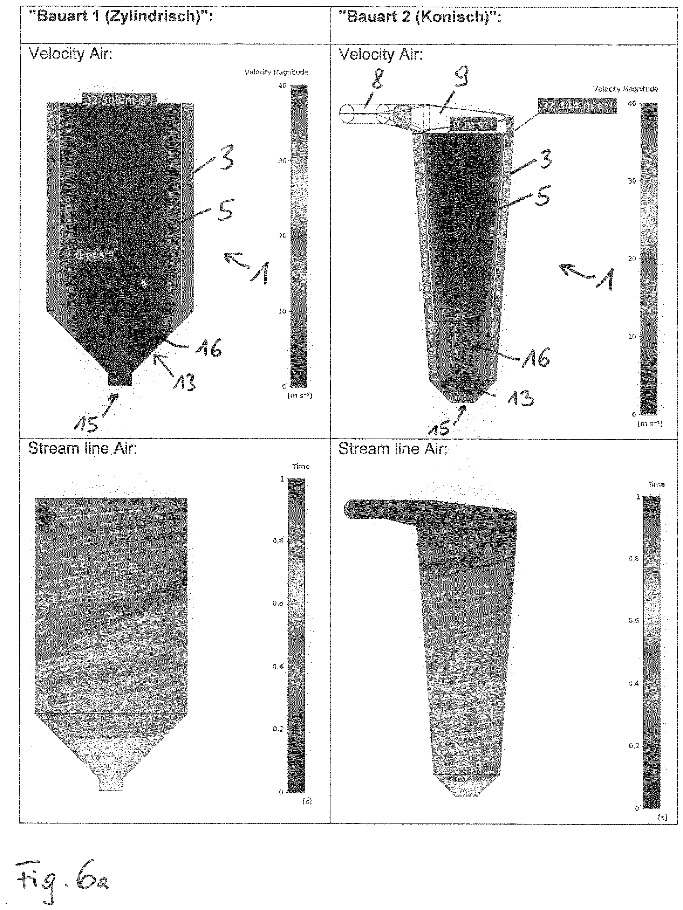

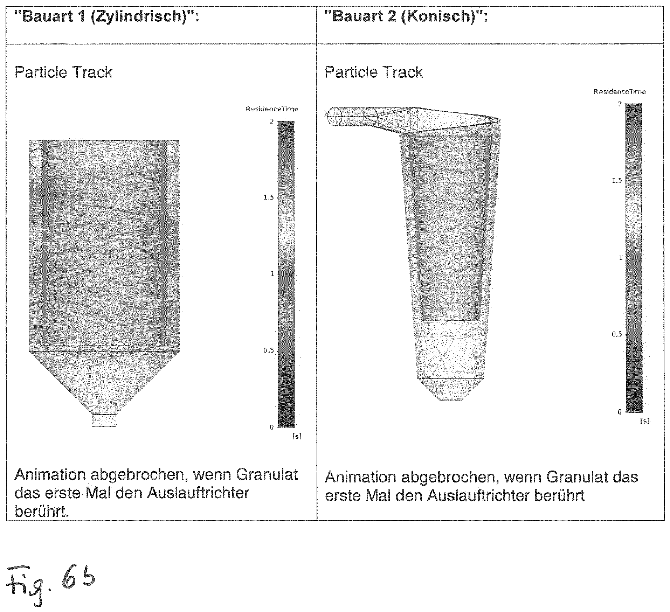

Auf diese Weise strömen die Partikel bzw. das Gas sowohl tangential, als auch leicht in Richtung des Auslasses gerichtet in den Zwischenraum ein. Daraus ergibt sich ein für die Verweilzeit, das Verweilzeitspektrum sowie die Vereinzelung vorteilhaftes Bewegungsmuster, wie dies beispielsweise in Fig. 6 erkennbar ist. Die Partikel bewegen sich also ausgehend vom einlassseitigen Anfangsbereich auf spiralförmigen Bahnen zum auslassseitigen Endbereich, wobei der Durchmesser dieser spiralförmigen Bahnen immer geringer wird.

Die Menge bzw. die Geschwindigkeit des Gasstromes wird üblicherweise den Erfordernisses und den Partikelgrößen angepasst. In diesem Zusammenhang kann es vorteilhaft sein, wenn eine zusätzliche Gasmenge eingebracht wird. Es ist dabei günstig, wenn in der äußeren Mantelfläche und/oder in der inneren Mantelfläche zusätzliche Gaseinlassöffnungen ausgebildet sind, die so angeordnet und/oder ausgebildet sind, dass über diese Gaseinlassöffnungen zusätzliches Gas, allerdings keine Partikel, vorteilhafterweise auch im wesentlichen tangential in den Zwischenraum einbringbar ist. Der zusätzliche Gasstrom unterstützt den primären Gasstrom über die Einlasseinrichtung, führt also zu einer weiteren Abkühlung der Partikel und beeinflusst die Verweilzeit. Damit kann beispielweise auch kaltes Gas in den Trichter gebracht werden, um entsprechend weiter zu kühlen. Auch reaktives Gas kann hier eingebracht werden, um spezifische Reaktionen zu initiieren.

Weitere Vorteile und Ausgestaltungen der Erfindung ergeben sich aus der Beschreibung und den beiliegenden Zeichnungen.

Die Erfindung ist im Folgenden anhand von besonders vorteilhaften Ausführungsbeispielen in den Zeichnungen schematisch dargestellt und wird unter Bezugnahme auf die Zeichnungen beispielhaft beschrieben.

Im Folgenden zeigen schematisch:
Fig. 1 eine erfindungsgemäße Vorrichtung in perspektivischer Ansicht,
Fig. 2 die Vorrichtung gemäß Fig. 1 in Seitenansicht,
Fig. 3 bzw. 3a einen Schnitt B-B durch diese Vorrichtung,
Fig. 4 eine Draufsicht von oben,
Fig. 5 einen Versuch mit einer bekannten Vergleichseinrichtung
Fig. 6a, 6b Versuche mit zwei erfindungsgemäßen Kühleinrichtungen

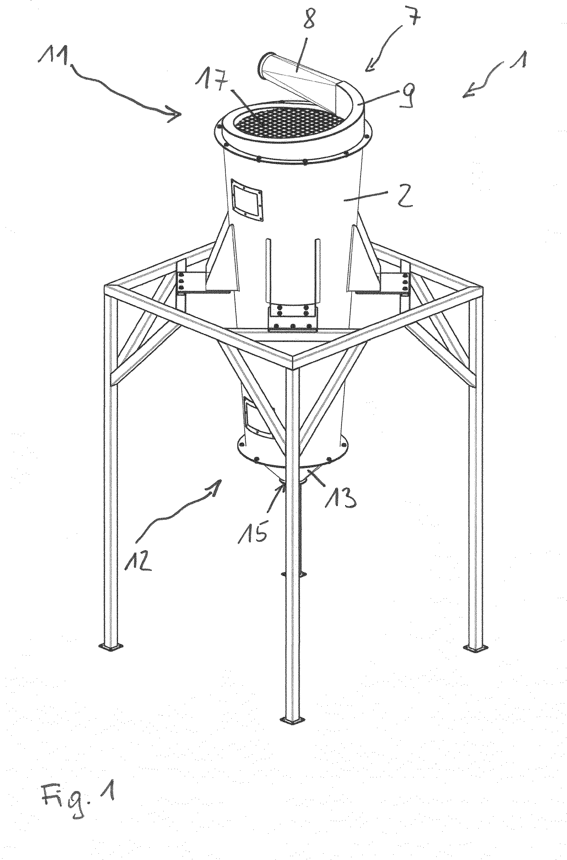

Die Fig. 1 bis 4 zeigen die erfindungsgemäße Vorrichtung 1 aus unterschiedlichen Perspektiven. Im vorliegenden Ausführungsbeispiel ist die Vorrichtung 1 vertikal positioniert, und zwar in einem Tragegerüst. Im obersten Bereich der Vorrichtung 1 ist eine Einlasseinrichtung 7 zum Einbringen des Gas- bzw. Partikelstroms angeordnet. Dieser obere Abschnitt der Vorrichtung 1 wird dabei als einlassseitiger Anfangsbereich 11 definiert. Der der Einlasseinrichtung 7 gegenüberliegende Abschnitt der Vorrichtung 1 wird als auslassseitiger Endbereich 12 bezeichnet. Dort befindet sich auch die Austrittsöffnung 15, aus der die Partikel die Vorrichtung 1 verlassen.

Die Vorrichtung 1 umfasst einen Außenbehälter 2 und einen darin angeordneten Innenbehälter 4. Der Außenbehälter 2 besitzt eine kegelstumpfförmige äußere Mantelfläche 3, der Innenbehälter 4 besitzt eine kegelstumpfförmige innere Mantelfläche 5. Der Innenbehälter 4 ist derart im Außenbehälter 2 angeordnet, dass zwischen der äußeren Mantelfläche 3 und der inneren Mantelfläche 5 ein Zwischenraum 6 ausgebildet ist. Die Breite a des Zwischenraums zwischen der äußeren Mantelfläche 3 und der inneren Mantelfläche 5 beträgt im vorliegenden Fall rund 70 mm.

Die äußere Mantelfläche 3 und die innere Mantelfläche 5 sind voneinander durchgehend beabstandet und berühren sich an keiner Stelle. Dementsprechend ist der Zwischenraum 6 barrierefrei und es wird ein kegelstumpfförmiger Ringraum ausgebildet, in dem der Gasstrom und die Partikel spiralförmig umlaufen.

Die äußere Mantelfläche 3 und die innere Mantelfläche 5 sind gegenüber einer zentralen Längsachse 10 um den Kegelwinkel β geneigt. Im vorliegenden Ausführungsbeispiel liegt der Kegelwinkel β bei rund 5°.

Im vorliegenden Ausführungsbeispiel sind die äußere Mantelfläche 3 und die innere Mantelfläche 5 parallel zueinander ausgerichtet. Es kann aber vorteilhaft sein von einer parallelen Ausrichtung abzuweichen und beispielsweise eine Vergrößerung oder eine Verringerung der Spaltbreite vorzusehen.

Erkennbar ist, dass sich die äußere Mantelfläche 3 und die innere Mantelfläche 5 in Richtung des auslassseitigen Endbereichs 12, hier also nach unten zu, verjüngen. Dementsprechend ist der Durchmesser da1 der äußeren Mantelfläche 3 am einlassseitigen Endbereich 11 größer als der Durchmesser da2 der äußeren Mantelfläche 3 am auslassseitigen Endbereich 12 bzw. der hier unteren Öffnung 18 der äußeren Mantelfläche 3.

Analog ist auch der Durchmesser di1 der inneren Mantelfläche 5 am einlassseitigen Anfangsbereich 11 bzw. der hier oberen Öffnung 19 der inneren Mantelfläche 5 größer als der auslassseitige Durchmesser di2 der inneren Mantelfläche 5 am auslassseitigen Endbereich 12. Die obere, am einlassseitigen Anfangsbereich 11 befindliche, relativ größere, Öffnung 19 der inneren Mantelfläche 5 ist dabei durch eine Deckfläche 17 verschlossen.

Erkennbar ist auch, dass die äußere Mantelfläche 3 eine größere Länge bzw. Höhe ha aufweist als die Höhe hi der inneren Mantelfläche 5. In der Vorrichtung 1 gemäß Fig. 1 beträgt das Verhältnis hi : ha etwa 0,6.

Es liegt dadurch im unteren Abschnitt der Vorrichtung 1 ein Abscheidebereich 16 vor, in dem der Innenbehälter 4 bereits zu Ende ist und auch kein definierter Zwischenraum 6 mehr vorliegt. Dieser Abscheidebereich 16 wird nur noch durch den Außenbehälter 2 bzw. die äußere Mantelfläche 3 begrenzt.

Im Abscheidebereich 16 bewegen sich die Partikel aber weiterhin entlang der äußeren Mantelfläche 3 bis nach unten. Der Gasstrom wird hingegen am Ende des Zwischenraums 6 über die innere Mantelfläche 5 nach oben abgeführt. Hier erfolgt dementsprechend die Trennung der Partikel vom Gasstrom. Die Partikel verlassen die Vorrichtung 1 unten durch die Austrittsöffnung 15, das Gas verlässt die Vorrichtung 1 oben durch die obere Öffnung 19 der inneren Mantelfläche 5. Diese obere Öffnung 19 ist mit einer gasdurchlässigen Deckfläche 17 versehen, im vorliegenden Fall durch ein Gitter.

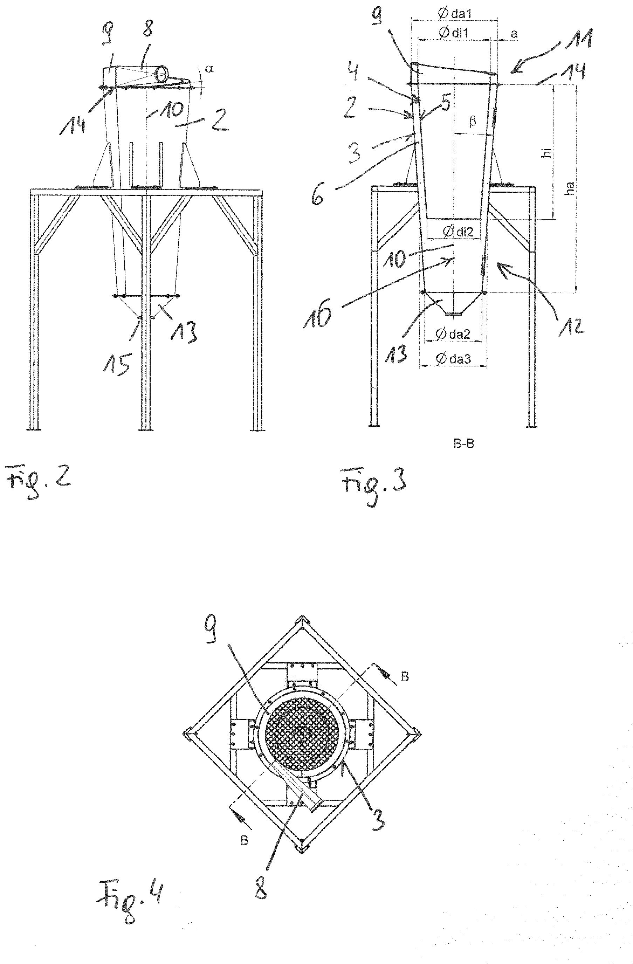

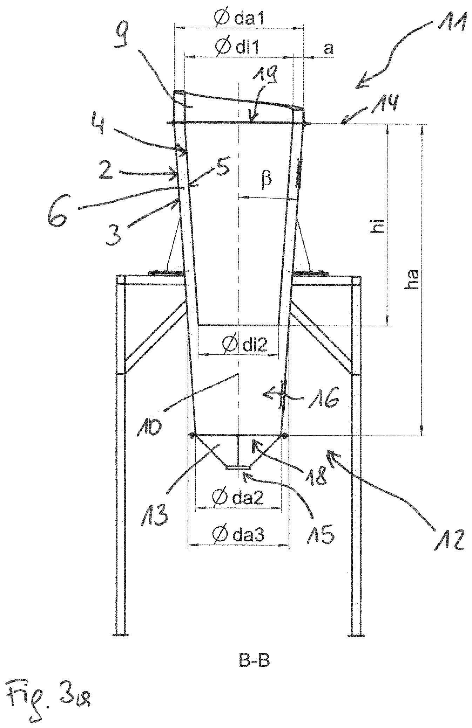

Durch die Verringerung des Durchmessers der äußeren Mantelfläche 3 erhöht sich bereits der Strömungswiderstand. Ist die Öffnung 18 am unteren Ende der äußeren Mantelfläche 3 klein genug, so wird der Strömungswiderstand so groß, dass das Gas nicht durch diese untere Öffnung 18 austritt, sondern eher nur über die obere Öffnung 19 der inneren Mantelfläche 5. Die Partikel treten allerdings immer unten aus und diese untere Öffnung 18 kann, wenn sie klein genug ist, gleichzeitig auch als Austrittsöffnung 15 wirken. Meist bewirkt dies aber eine größere Bauhöhe der Vorrichtung 1. Dementsprechend kann der Strömungswiderstand auch durch zusätzliche konstruktive Maßnahmen noch weiter erhöht werden. So ist, wie im Ausführungsbeispiel gemäß Fig. 3a ersichtlich, am auslassseitigen Endbereich 12 der äußeren Mantelfläche 3 ganz unten ein zusätzlicher kegelstumpfförmiger Auslassstutzen 13 angeordnet. In diesem Auslassstutzen 13 ist auch die eigentliche Austrittsöffnung 15 für die Partikel ausgebildet, aus der die Partikel schlussendlich die Vorrichtung 1 verlassen. Der Auslassstutzen 13 schließt direkt an die untere Öffnung 18 der äußeren Mantelfläche 3 an, wobei die Querschnittsfläche der Austrittsöffnung 15 beträchtlich kleiner ist als die der unteren Öffnung 18, vorliegend nur ca. 7-8 % der Querschnittsfläche der unteren Öffnung 18. Durch diese zusätzliche Querschnittsverengung wird der Strömungswiderstand noch weiter erhöht und die Abtrennung der Partikel vom Gasstrom noch effektiver.

Die im einlassseitigen Anfangsbereich 11 angeordnete Einlasseinrichtung 7 weist einen Einlassstutzen 8 auf, an den beispielsweise eine Transportleitung anschließbar ist, über die die noch heißen Partikel bzw. Granulate in die Vorrichtung 1 gemeinsam mit dem Gasstrom eingebracht werden.

Der Einlassstutzen 8 mündet in einen Einlasskanal 9. Dieser Einlasskanal 9 ist kurvig bzw. spiralig gekrümmt ausgebildet und verläuft im Wesentlichen kreisförmig parallel zum Umfang der äußeren Mantelfläche 3 und der inneren Mantelfläche 5. Der Einlasskanal 9 verschließt den Zwischenraum 6 oben bzw. einlassseitig. Im vorliegenden Fall, beim vorliegenden Durchmesser der Mantelflächen 3, 5 und bei vorliegenden Neigungswinkel α, beschreibt der Einlasskanal 9 einen nahezu vollständigen Kreis von fast 360° und mündet dann, etwa im Bereich unterhalb des Einlassstutzens 8, in den Zwischenraum 6 ein. Der Einlasskanal 9 hat dementsprechend die gleiche Breite a wie der Zwischenraum 6. Dementsprechend wird der Gas- bzw. Partikelstrom tangential in den Zwischenraum 6 eingebracht, d.h. die Partikel und der Gasstrom laufen auf annähernden Kreisbahnen rund um die zentrale Längsachse 10 im Zwischenraum 6 herum. Zudem werden so turbulente Strömungen, Abrisskanten und Stoßkanten vermieden.

Gleichzeitig ist der Einlasskanal 9 aber auch leicht nach unten, in Richtung des Auslasses, geneigt. Dies ist bereits aus Fig. 1 erkennbar, und der Einlasskanal 9 verläuft über eine konstant schräg nach unten geneigte Fläche ins Innere des Zwischenraums 6. Dieser geneigte Eintrittswinkel α definiert sich gegenüber einer normal zur Längsachse 10 ausgerichteten Ebene 14 und beträgt, wie in Fig. 2 ersichtlich, rund 5°.

Auf diese Weise strömen die Partikel bzw. das Gas nicht nur tangential, sondern auch leicht nach unten gerichtet in den Zwischenraum 6 ein. Daraus ergibt sich ein Bewegungsmuster wie beispielsweise in Fig. 6 erkennbar. Die Partikel bewegen sich also auf spiralförmigen Bahnen vom einlassseitigen Anfangsbereich 11 zum auslassseitigen Endbereich 12, wobei der Durchmesser dieser spiralförmigen Bahnen immer geringer wird.

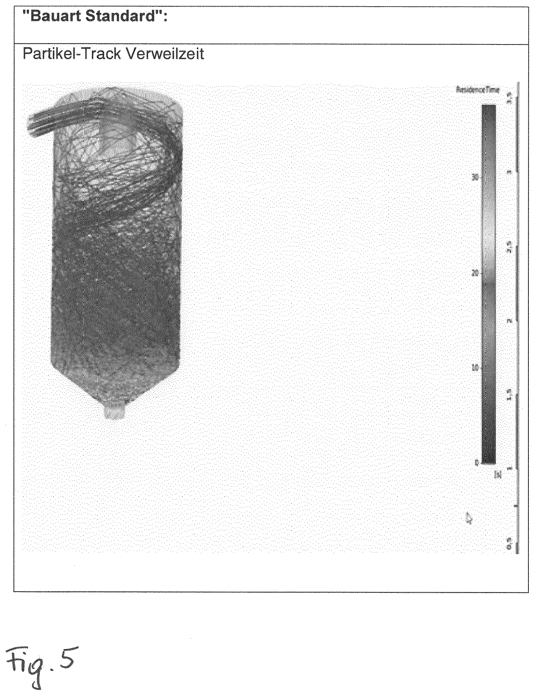

Die nachfolgenden Ausführungsbeispiele zeigen Versuche und Ergebnisse mit verschiedenen Kühleinrichtungen im Vergleich (Fig. 5 und Fig. 6a, 6b):
Die Versuche wurden mit den folgenden Parametern durchgeführt:
- Luftvolumen: 2700 m³/h
- Granulatmenge: 85 kg/h
- Medium: Luft
- Lufttemperatur Einlauf: 19°C
- Granulate waren immer vereinzelt.

| Material + MatNr. | Zyklon | T Granulat Beginn [°C] | T Granulat Ende [°C] |
|---|---|---|---|
| LDPE | | | |
| 20190227/4 | "Standard" | 137 | 101 |
| 20190227/5 | "Bauart 2 (Konisch)" | 137 | 75 |
| LDPE/PP | | | |
| 2019044/10 | "Standard" | 175 | 100 |
| 2019044/9 | "Bauart 2 (Konisch)" | 174 | 80 |
| LDPE/PP/CaCO3 | | | |
| 2018220/31 | "Standard" | 171 | 109 |
| 2018220/20 | "Bauart 2 (Konisch)" | 173 | 75 |

| | | | |
|---|---|---|---|
| "Bauart Standard" (Fig. 5): Inlet Luft: 0,6 kg/s; 20 °C Inlet Particle: 100 kg/h D 4mm; 80 Tracks "Bauart 1 (Zylindrisch)" (Fig. 6a, 6b, linke Spalte): Inlet Luft: 0,6 kg/s; 20 °C Inlet Particle: 100 kg/h D 4mm; 50 Tracks "Bauart 2 (Konisch)" (Fig. 6a, 6b, rechte Spalte): Inlet Luft: 0,6 kg/s; 20 °C Inlet Particle: 100 kg/h D 4mm; 50 Tracks | | | |

Die Versuche wurden mit unterschiedlichen Materialien durchgeführt und u.a. die Geschwindigkeitsverteilung und das Verweilzeitspektrum untersucht. Dabei wurde zur Beurteilung auch die erzielte Endtemperatur des Granulates herangezogen.

Bei dem als "Bauart Standard" (Fig. 5) bezeichneten, aus dem Stand der Technik bekannten Zyklon handelt es sich um einen zylindrischen Zyklon und einem kegelförmigen Ende mit tangentialen Lufteinlass, jedoch ohne Innenbehälter und ohne andere Einrichtungen im Innenbereich. Am oberen Ende befindet sich ein Luftauslassrohr, das ca. 1/3 in den Zylinder hineinragt. Bei diesem Zyklon wurde u.a. die Partikel-Verweilzeit simuliert. Gut erkennbar ist in Fig. 5, dass die Partikel sehr schnell in den unteren Bereich des Zyklons vordringen, also keine lange Verweilzeit im Kühlsilo haben, und es im unteren Bereich bzw. im Bereich des Auslasstrichters, zu einer Ansammlung von Teilchen kommt. Dies führt zu einer erhöhten Teilchenhäufigkeit, bei der Verklebungen auftreten können und Zwillinge und Drillinge (also zwei oder drei aneinander haftende Granulate) gebildet werden. Zudem heizt sich dieser Bereich auch auf und es kann dadurch zu störenden Wandhaftungen kommen.

Beim erfindungsgemäßen zylindrischen Kühlsilo mit Innenmantel "Bauart 1 (Zylindrisch)" (Fig. 6a, 6b, linke Spalte) ist speziell beim Partikel-Track (Fig. 6b) klar erkennbar, dass die Partikel gleichmäßiger geführt werden als beim Zyklon "Bauart Standard". Die Luftführung im Einlassbereich hat eine erhöhte Luftgeschwindigkeit, die aber über die Höhe stark abnimmt. Das ist bei kleinen ungefüllten Granulaten mit geringerem spezifischen Gewicht allerdings kein allzu großes Problem, da die Luft die Granulate weiter ausreichend lange am Umfang halten kann.

Beim erfindungsgemäßen konischen Kühlsilo mit Innenmantel "Bauart 2 (Konisch)" (Fig. 6a, 6b, rechte Spalte) gelingt es die Luftströmung weitgehend konstant über die Bauhöhe zu halten. Dies führt, obwohl die Durchmesser des Silos abnehmen, zu längerer Verweilzeit der Granulate im Kühlsilo. Weiters ist die Luftströmung ausreichend hoch, dass auch spezifisch schwerere Granulate in der Wendel gehalten werden können und somit ausreichend vereinzelt bleiben und entsprechend verfestigt/gekühlt werden können.

## Patentansprüche

1. Vorrichtung zum Abkühlen von partikelförmigen Materialien bzw. Partikeln, insbesondere von Granulaten aus polymeren Materialien, umfassend einen Außenbehälter (2) mit einer, insbesondere kegelstumpfförmigen, äußeren Mantelfläche (3) und
einen zumindest abschnittsweise im Inneren des Außenbehälters (2) angeordneten Innenbehälter (4) mit einer, insbesondere kegelstumpfförmigen, inneren Mantelfläche (5), wobei zwischen der äußeren Mantelfläche (3) und der inneren Mantelfläche (5) ein Zwischenraum (6) ausgebildet ist,
wobei in einem einlassseitigen Anfangsbereich (11) der Vorrichtung (1) eine Einlasseinrichtung (7) zum Einbringen eines Gasstroms sowie der Partikel in den Zwischenraum (6) vorgesehen ist und
wobei in einem der Einlasseinrichtung (7) gegenüberliegenden auslassseitigen Endbereich (12) der Vorrichtung (1) eine Austrittsöffnung (15) für die Partikel vorgesehen ist,
wobei die Einlasseinrichtung (7) so angeordnet und/oder ausgebildet ist, dass der Gasstrom sowie die Partikel im wesentlichen tangential in den Zwischenraum (6) einbringbar sind,
**dadurch gekennzeichnet, dass**
die Einlasseinrichtung (7) einen Einlasskanal (9) und insbesondere einen stromaufwärts dazu angeordneten Einlassstutzen (8), über den der Gas- und Partikelstrom zuführbar ist, aufweist, wobei der Einlasskanal (9) gekrümmt ausgebildet ist und parallel zum Umfang der äußeren Mantelfläche (3) und der inneren Mantelfläche (5) verläuft, und in den Zwischenraum (6) im wesentlichen tangential einmündet,
und dass der Einlasskanal (9) den Zwischenraum (6) einlassseitig verschließt.

2. Vorrichtung nach Anspruch 1, dass die äußere Mantelfläche (3) und/oder die innere Mantelfläche (5) im wesentlichen rotationssymmetrisch um eine zentrale Längsachse (10) angeordnet sind.

3. Vorrichtung nach einem der Ansprüche 1 bis 2, dass die äußere Mantelfläche (3) und/oder die innere Mantelfläche (5) gegenüber einer zentralen Längsachse (10) um einen Kegelwinkel (β) geneigt ist, wobei der Kegelwinkel (β) im Bereich von 1° <= β <= 15°, insbesondere im Bereich von 3° <= β <= 10°, vorzugsweise im Bereich von 3° <= β <= 6°, liegt.

4. Vorrichtung nach einem der Ansprüche 1 bis 3, dass die äußere Mantelfläche (3) und die innere Mantelfläche (5) voneinander allseitig berührungsfrei beabstandet sind.

5. Vorrichtung nach einem der Ansprüche 1 bis 4, dass die äußere Mantelfläche (3) und die innere Mantelfläche (5) zueinander parallel ausgerichtet sind.

6. Vorrichtung nach einem der Ansprüche 1 bis 5, dass die Breite (a) des Zwischenraums (6) zwischen der äußeren Mantelfläche (3) und der inneren Mantelfläche (5) im Bereich von 20 mm <= a <= 200 mm, insbesondere im Bereich von 50 mm <= a <= 100 mm, vorzugsweise im Bereich von 60 mm <= a <= 80 mm liegt.

7. Vorrichtung nach einem der Ansprüche 1 bis 6, dass sich die Breite (a) des Zwischenraums (6) zwischen der äußeren Mantelfläche (3) und der inneren Mantelfläche (5) in Richtung des auslassseitigen Endbereichs (12), insbesondere gleichförmig, verringert.

8. Vorrichtung nach einem der Ansprüche 1 bis 6, dass sich die Breite (a) des Zwischenraums (6) zwischen der äußeren Mantelfläche (3) und der inneren Mantelfläche (5) in Richtung des auslassseitigen Endbereichs (12), insbesondere gleichförmig, vergrößert.

9. Vorrichtung nach einem der Ansprüche 1 bis 8, dass die Länge bzw. Höhe (ha) des Außenbehälters (2) oder der äußeren Mantelfläche (3) größer ist als die Länge bzw. Höhe (hi) des Innenbehälters (4) oder der inneren Mantelfläche (5), wobei insbesondere gilt: das Verhältnis (hi) : (ha) liegt im Bereich von 0,1 bis 1, insbesondere im Bereich von 0,3 bis 0,85, vorzugsweise im Bereich von 0,50 bis 0,75.

10. Vorrichtung nach einem der Ansprüche 1 bis 9, dass die äußere Mantelfläche (3) und die innere Mantelfläche (5) an ihren einlassseitigen Anfangsbereichen (11) bündig abschließen.

11. Vorrichtung nach einem der Ansprüche 1 bis 10, dass sich die äußere Mantelfläche (3) in Richtung des auslassseitigen Endbereichs (12) weiter erstreckt bzw. länger ist als die innere Mantelfläche (5).

12. Vorrichtung nach einem der Ansprüche 1 bis 11, dass der Durchmesser (da1) der äußeren Mantelfläche (3) am einlassseitigen Anfangsbereich (11) größer ist als deren Durchmesser (da2) am auslassseitigen Endbereich (12) bzw. dass sich der Außenbehälter (2) in Richtung des auslassseitigen Endbereichs (12) verjüngt.

13. Vorrichtung nach einem der Ansprüche 1 bis 12, dass der Durchmesser (di1) der inneren Mantelfläche (4) am einlassseitigen Anfangsbereich (11) größer ist als deren auslassseitiger Durchmesser (di2) am auslassseitigen Endbereich (12) bzw. dass sich der Innenbehälter (5) in Richtung des auslassseitigen Endbereichs (12) verjüngt.

14. Vorrichtung nach einem der Ansprüche 1 bis 13, dass sich die äußere Mantelfläche (3) und die innere Mantelfläche (5) in Richtung des auslassseitigen Endbereichs (12) verjüngen.

15. Vorrichtung nach einem der Ansprüche 1 bis 14, dass die durch den Durchmesser (da2) am auslassseitigen Endbereich (12) definierte Öffnung (18) der äußeren Mantelfläche (3) bzw. die durch den Durchmesser der Austrittsöffnung (15) definierte Fläche gegenüber der durch den Durchmesser (di2) am auslassseitigen Endbereich (12) definierten Öffnung (19) der inneren Mantelfläche (5) derart reduziert ist, dass sich für das Gas ein ausreichender Strömungswiderstand bildet, um eine Abtrennung der Partikel vom Gas zu bewirken.

16. Vorrichtung nach einem der Ansprüche 1 bis 15, dass am auslassseitigen Endbereich (12) der äußeren Mantelfläche (3) ein sich verjüngender, insbesondere kegelstumpfförmiger, Auslassstutzen (13) angeordnet ist, in dem die Austrittsöffnung (15) vorgesehen ist, über die der Partikelstrom aus der Vorrichtung (1) austritt, wobei die Fläche der Austrittsöffnung (15) <= 20 %, vorzugsweise <= 10 %, der Fläche, der durch den Durchmesser (da2) am auslassseitigen Endbereich (12) definierten Öffnung (18) der äußeren Mantelfläche (3), ist.

17. Vorrichtung nach einem der Ansprüche 1 bis 16, dass die innere Mantelfläche (5) an ihrem dem einlassseitigen Anfangsbereich (11) nahen Ende offen bzw. gasdurchlässig ist oder gegebenenfalls mit einer gasdurchlässigen Deckfläche (17) versehen ist.

18. Vorrichtung nach einem der Ansprüche 1 bis 17, dass der Einlasskanal (9) die gleiche Breite (a) aufweist wie der Zwischenraum (6).

19. Vorrichtung nach einem der Ansprüche 1 bis 18, dass der Einlasskanal (9) in einem Winkel (α) gegenüber einer normal zur Längsachse (10) ausgerichteten Ebene (14) in den Zwischenraum (6) einmündet, wobei der Winkel (α) im Bereich von 0 < α <= 10° ist, wobei insbesondere vorgesehen ist, dass der Einlasskanal (9) über seine gesamte Längserstreckung im Winkel (α) gleichförmig geneigt ist.

20. Vorrichtung nach einem der Ansprüche 1 bis 19, dass in der äußeren Mantelfläche (3) und/oder in der inneren Mantelfläche (5) zusätzliche Gaseinlassöffnungen ausgebildet sind, die so angeordnet und/oder ausgebildet sind, dass über diese Gaseinlassöffnungen Gas insbesondere im wesentlichen tangential in den Zwischenraum (6) einbringbar ist.

## Claims

1. A device for cooling particulate materials or particles, in particular granules made of polymeric materials, comprising
an outer container (2) with an, in particular frusto-conical, outer shell surface (3) and
an inner container, (4), arranged at least in sections inside the outer container (2), with an, in particular frusto-conical, inner shell surface (5), wherein an intermediate space (6) is formed between the outer shell surface (3) and the inner shell surface (5),
wherein, in an inlet-side initial region (11) of the device (1), an inlet device (7) for introducing a gas stream and the particles into the intermediate space (6) is provided and
wherein, in an outlet end region (12) of the device (1) opposite the inlet device (7) an outlet opening (15) for the particles is provided,
wherein the inlet device (7) is arranged and/or configured in such a way that the gas stream and the particles can be introduced essentially tangentially into the intermediate space (6),
**characterised in that**
the inlet device (7) has an inlet channel (9) and in particular an inlet port (8) arranged upstream thereto, through which the gas and particle stream can be supplied, wherein the inlet channel (9) is curved and parallel to the circumference of the outer shell surface (3) and the inner shell surface (5), and essentially tangentially opens into the intermediate space (6),
and the inlet channel (9) closes the intermediate space (6) on the inlet side.

2. The device according to claim 1, wherein the outer shell surface (3) and/or the inner shell surface (5) are arranged essentially rotationally symmetrically about a central longitudinal axis (10).

3. The device according to any one of claims 1 to 2, wherein the outer shell surface (3) and/or the inner shell surface (5) is inclined relative to a central longitudinal axis (10) by a cone angle (β), wherein the cone angle (β) is in a range of 1° < β < 15°, in particular in a range of 3° ≤ β ≤ 10°, preferably in a range of 3° ≤ β ≤ 6°.

4. The device according to any one of claims 1 to 3, wherein the outer shell surface (3) and the inner shell surface (5) are spaced apart from one another on all sides without contact.

5. The device according to any one of claims 1 to 4, wherein the outer shell surface (3) and the inner shell surface (5) are aligned parallel to one another.

6. The device according to any one of claims 1 to 5, wherein the width (a) of the intermediate space (6) between the outer shell surface (3) and the inner shell surface (5) is in a range of 20 mm ≤ a ≤ 200 mm, in particular in a range of 50 mm ≤ a ≤ 100 mm, preferably in a range of 60 mm ≤ a ≤ 80 mm.

7. The device according to any one of claims 1 to 6, wherein the width (a) of the intermediate space (6) between the outer shell surface (3) and the inner shell surface (5) decreases, in particular uniformly, in a direction of the outlet-side end region (12).

8. The device according to any one of claims 1 to 6, wherein the width (a) of the intermediate space (6) between the outer shell surface (3) and the inner shell surface (5) increases, in particular uniformly, in a direction of the outlet-side end region (12).

9. The device according to any one of claims 1 to 8, wherein the length or height (ha) of the outer container (2) or of the outer shell surface (3) is greater than the length or height (hi) of the inner container (4) or of the inner shell surface (5), wherein in particular: the ratio (hi:(ha) is in a range from 0.1 to 1, in particular in a range from 0.3 to 0.85, preferably in a range from 0.50 to 0.75.

10. The device according to any one of claims 1 to 9, wherein the outer shell surface (3) and the inner shell surface (5) are flush at their inlet-side initial regions (11).

11. The device according to any one of claims 1 to 10, wherein the outer shell surface (3) extends further or is longer than the inner shell surface (5) in a direction of the outlet-side end region (12).

12. The device according to any one of claims 1 to 11, wherein the diameter (da1) of the outer shell surface (3) at the inlet-side initial region (11) is greater than its diameter (da2) at the outlet-side end region (12), or in that the outer container (2) tapers in a direction of the outlet-side end region (12).

13. The device according to any one of claims 1 to 12, wherein the diameter (di1) of the inner shell surface (4) at the inlet-side initial region (11) is greater than its outlet-side diameter (di2) at the outlet-side end region (12), or wherein the inner container (5) tapers in a direction of the outlet-side end region (12).

14. The device according to any one of claims 1 to 13, wherein the outer shell surface (3) and the inner shell surface (5) taper in a direction of the outlet-side end region (12).

15. The device according to any one of claims 1 to 14, wherein the opening (18) of the outer shell surface (3) defined by a diameter (da2) at the outlet-side end region (12) or an area defined by the diameter of the outlet opening (15) is reduced relative to the opening (19) of the inner shell surface (5) defined by the diameter (di2) at the outlet-side end region (12) in such a way that sufficient flow resistance is formed for the gas to effect separation of the particles from the gas.

16. The device according to any one of claims 1 to 15, wherein a tapering, in particular frusto-conical, outlet nozzle (13) is arranged at the outlet-side end region (12) of the outer shell surface (3), in which the outlet opening (15) is provided, via which the particle flow exits the device (1), wherein the area of the outlet opening (15) is ≤ 20 %, preferably 10 % of the area of the opening (18), defined by a diameter (da2) at the outlet-side end region (12), of the outer shell surface (3).

17. The device according to any one of claims 1 to 16, wherein the inner shell surface (5) is open or gas-permeable at its end close to the inlet-side initial region (11), or is optionally provided with a gas-permeable cover surface (17).

18. The device according to any one of claims 1 to 17, wherein the inlet channel (9) has the same width (a) as the intermediate space (6).

19. The device according to any one of claims 1 to 18, wherein the inlet channel (9) opens into the intermediate space (6) at an angle (α) with respect to a plane (14) aligned normal to a longitudinal axis (10), wherein the angle (α) is in a range of 0 < α 10°, wherein it is provided in particular that the inlet channel (9) is uniformly inclined at the angle (α) over its entire longitudinal extent.

20. The device according to any one of claims 1 to 19, wherein additional gas inlet openings are formed in the outer shell surface (3) and/or in the inner shell surface (5), which openings are arranged and/or configured in such a way that gas can be introduced, essentially tangentially, into the intermediate space (6) via these gas inlet openings.

## Revendications

1. Dispositif de refroidissement de matériaux particulaires ou particules, en particulier de granulés en matériaux polymères, comprenant
un récipient extérieur (2) avec une surface enveloppe extérieure (3), en particulier en forme de cône tronqué et
un récipient intérieur (4) agencé au moins par sections à l'intérieur du récipient extérieur (2) avec une surface enveloppe intérieure (5), en particulier en forme de cône tronqué, dans lequel un espace intermédiaire (6) est réalisé entre la surface enveloppe extérieure (3) et la surface enveloppe intérieure (5),
dans lequel un appareil d'admission (7) est prévu pour l'introduction d'un courant de gaz ainsi que des particules dans l'espace intermédiaire (6) dans une zone de début (11) côté admission du dispositif (1) et
dans lequel une ouverture de sortie (15) pour les particules est prévue dans une zone d'extrémité (12) côté sortie du dispositif (1) opposée à l'appareil d'admission (7),
dans lequel l'appareil d'admission (7) est agencé et/ou réalisé de sorte que le courant de gaz ainsi que les particules puissent être introduits sensiblement tangentiellement dans l'espace intermédiaire (6),
**caractérisé en ce que**
l'appareil d'admission (7) présente un canal d'admission (9) et en particulier une tubulure d'admission (8) agencée en amont de celui-ci, par le biais de laquelle le courant de gaz et de particules peut être amené, dans lequel le canal d'admission (9) est réalisé de manière incurvée et s'étend parallèlement à la périphérie de la surface enveloppe extérieure (3) et de la surface enveloppe intérieure (5), et débouche sensiblement tangentiellement dans l'espace intermédiaire (6),
et **en ce que** le canal d'admission (9) ferme l'espace intermédiaire (6) côté admission.

2. Dispositif selon la revendication 1, **caractérisé en ce que** la surface enveloppe extérieure (3) et/ou la surface enveloppe intérieure (5) sont agencées sensiblement de manière symétrique en rotation autour d'un axe longitudinal (10) central.

3. Dispositif selon l'une quelconque des revendications 1 à 2, **caractérisé en ce que** la surface enveloppe extérieure (3) et/ou la surface enveloppe intérieure (5) est inclinée par rapport à un axe longitudinal central (10) selon un angle de cône (β), dans lequel l'angle de cône (β) se situe dans la plage de 1° <= β <= 15°, en particulier dans la plage de 3° <= β <= 10°, de préférence dans la plage de 3° <= β <= 6°.

4. Dispositif selon l'une quelconque des revendications 1 à 3, **caractérisé en ce que** la surface enveloppe extérieure (3) et la surface enveloppe intérieure (5) sont espacées l'une de l'autre de tous les côtés sans contact.

5. Dispositif selon l'une quelconque des revendications 1 à 4, **caractérisé en ce que** la surface enveloppe extérieure (3) et la surface enveloppe intérieure (5) sont orientées parallèlement l'une par rapport à l'autre.

6. Dispositif selon l'une quelconque des revendications 1 à 5, **caractérisé en ce que** la largeur (a) de l'espace intermédiaire (6) se situe entre la surface enveloppe extérieure (3) et la surface enveloppe intérieure (5) dans la plage de 20 mm <= a <= 200 mm, en particulier dans la plage de 50 mm <= a <= 100 mm, de préférence dans la plage de 60 mm <= a <= 80 mm.

7. Dispositif selon l'une quelconque des revendications 1 à 6, **caractérisé en ce que** la largeur (a) de l'espace intermédiaire (6) diminue, en particulier uniformément, entre la surface enveloppe extérieure (3) et la surface enveloppe intérieure (5) en direction de la zone d'extrémité (12) côté sortie.

8. Dispositif selon l'une quelconque des revendications 1 à 6, **caractérisé en ce que** la largeur (a) de l'espace intermédiaire (6) augmente, en particulier uniformément, entre la surface enveloppe extérieure (3) et la surface enveloppe intérieure (5) en direction de la zone d'extrémité (12) côté sortie.

9. Dispositif selon l'une quelconque des revendications 1 à 8, **caractérisé en ce que** la longueur ou la hauteur (ha) du récipient extérieur (2) ou de la surface enveloppe extérieure (3) est supérieure à la longueur ou la hauteur (hi) du récipient intérieur (4) ou de la surface enveloppe intérieure (5), dans lequel en particulier : le rapport (hi:(ha) se situe dans la plage de 0,1 à 1, en particulier dans la plage de 0,3 à 0,85, de préférence dans la plage de 0,50 à 0,75.

10. Dispositif selon l'une quelconque des revendications 1 à 9, **caractérisé en ce que** la surface enveloppe extérieure (3) et la surface enveloppe intérieure (5) se terminent de manière affleurante au niveau de leurs zones de début (11) côté admission.

11. Dispositif selon l'une quelconque des revendications 1 à 10, **caractérisé en ce que** la surface enveloppe extérieure (3) s'étend davantage ou est plus longue que la surface enveloppe intérieure (5) en direction de la zone d'extrémité (12) côté sortie.

12. Dispositif selon l'une quelconque des revendications 1 à 11, **caractérisé en ce que** le diamètre (da1) de la surface enveloppe extérieure (3) au niveau de la zone de début (11) côté admission est supérieur à son diamètre (da2) au niveau de la zone d'extrémité (12) côté sortie ou **en ce que** le récipient extérieur (2) se rétrécit en direction de la zone d'extrémité (12) côté sortie.

13. Dispositif selon l'une quelconque des revendications 1 à 12, **caractérisé en ce que** le diamètre (di1) de la surface enveloppe intérieure (4) au niveau de la zone de début (11) côté admission est supérieur à son diamètre (di2) côté sortie au niveau de la zone d'extrémité (12) côté sortie ou que le récipient intérieur (5) se rétrécit en direction de la zone d'extrémité (12) côté sortie.

14. Dispositif selon l'une quelconque des revendications 1 à 13, **caractérisé en ce que** la surface enveloppe extérieure (3) et la surface enveloppe intérieure (5) se rétrécissent en direction de la zone d'extrémité (12) côté sortie.

15. Dispositif selon l'une quelconque des revendications 1 à 14, **caractérisé en ce que** l'ouverture (18) définie par le diamètre (da2) au niveau de la zone d'extrémité (12) côté sortie de la surface enveloppe extérieure (3) ou la surface définie par le diamètre de l'ouverture de sortie (15) est réduite par rapport à l'ouverture (19) définie par le diamètre (di2) au niveau de la zone d'extrémité (12) côté sortie de la surface enveloppe intérieure (5) de telle manière qu'une résistance à l'écoulement suffisante se forme pour le gaz afin de provoquer une séparation des particules du gaz.

16. Dispositif selon l'une quelconque des revendications 1 à 15, **caractérisé en ce qu'**une tubulure de sortie (13) se rétrécissant, en particulier en forme de cône tronqué, est agencée au niveau de la zone d'extrémité (12) côté sortie de la surface enveloppe extérieure (3), tubulure dans laquelle l'ouverture de sortie (15) est prévue, par le biais de laquelle le courant de particules sort du dispositif (1), dans lequel la surface de l'ouverture de sortie (15) est <= 20 %, de préférence <= 10 %, de la surface, de l'ouverture (18) définie par le diamètre (da2) au niveau de la zone d'extrémité côté sortie (12) de la surface enveloppe extérieure (3).

17. Dispositif selon l'une quelconque des revendications 1 à 16, **caractérisé en ce que** la surface enveloppe intérieure (5) est ouverte ou perméable au gaz au niveau de son extrémité proche de la zone de début (11) côté admission ou est éventuellement pourvue d'une surface de recouvrement (17) perméable au gaz.

18. Dispositif selon l'une quelconque des revendications 1 à 17, **caractérisé en ce que** le canal d'admission (9) présente la même largeur (a) que l'espace intermédiaire (6).

19. Dispositif selon l'une quelconque des revendications 1 à 18, **caractérisé en ce que** le canal d'admission (9) débouche dans l'espace intermédiaire (6) selon un angle (α) par rapport à un plan (14) orienté orthogonalement à l'axe longitudinal (10), dans lequel l'angle (α) est dans la plage de 0 < a <= 10°, dans lequel il est en particulier prévu que le canal d'admission (9) soit incliné uniformément sur son étendue longitudinale entière à l'angle (a).

20. Dispositif selon l'une quelconque des revendications 1 à 19, **caractérisé en ce que** des ouvertures d'admission de gaz supplémentaires sont réalisées dans la surface enveloppe extérieure (3) et/ou dans la surface enveloppe intérieure (5), ouvertures qui sont agencées et/ou réalisées de sorte que du gaz puisse être introduit par le biais de ces ouvertures d'admission de gaz, en particulier sensiblement tangentiellement dans l'espace intermédiaire (6).
